# EUROPEAN PATENT APPLICATION

(11) **EP 4 553 934 A1**
(43) Date of publication of application: **14.05.2025**
(21) Application number: 23209058.9
(22) Date of filing: 10.11.2023
(51) Int. Cl.: H01M 8/04007, H01M 8/2475

(54) **THERMOCONTROLLED FUEL CELL SYSTEM WITH A PELTIER ELEMENT**

(71) Applicant: Airbus Operations GmbH, 21129 Hamburg (DE)
(72) Inventor: Hegenbart, Matthias, 21129 Hamburg (DE); Linde, Peter, 21129 Hamburg (DE)

(57) **Abstract**

The present disclosure relates to a fuel cell system (1) comprising a fuel cell stack (5), and a Peltier element (80) that, when an electric current is applied to the Peltier element (80), achieves different temperatures at two opposite surfaces (81). One of the two opposite surfaces (81) of the Peltier element (80) is in areal contact with a surface of the fuel cell stack (5). The fuel cell system (1) can be attached to or integrated into a primary structure of aircraft, such as structural fibre reinforced plastic laminate.

## Description

The present disclosure generally relates to a fuel cell system having a Peltier element. Particularly, the present disclosure relates to a fuel cell system having a Peltier element being in areal contact with a surface of the fuel cell stack. Furthermore, the present disclosure also relates to an aircraft having such fuel cell system.

A conventional fuel cell is cooled using a coolant circuit. A liquid or gaseous coolant takes up heat generated by the operating fuel cell and transports the heat through the coolant circuit to a heat sink (heat exchanger). Thus, the fuel cell has to be provided with inner coolant channels or with heat exchanging elements on an outer surface of the fuel cell, which can come into contact with the coolant.

However, in case such a fuel cell has to be installed in an aircraft, the coolant circuit requires at least some piping, a conveying device and a heat exchanger. This adds additional weight to the aircraft and, hence, increases fuel consumption of the aircraft.

It is therefore an object of the present disclosure to provide a lightweight fuel cell system.

This object is solved by the present invention as defined in the independent claims. Preferred embodiments are defined by the dependent claims.

According to a first aspect to better understand the present disclosure, a fuel cell system comprises a fuel cell stack, and a Peltier element that, when an electric current is applied to the Peltier element, achieves different temperatures at two opposite surfaces. One of the two opposite surfaces of the Peltier element is in areal contact with a surface of the fuel cell stack.

The Peltier element can be employed to cool the fuel cell stack during operation by simply applying an electric current to the Peltier element. Thus, no distinct cooling circuit is required to cool the fuel cell. The fuel cell system, hence, can be built very compact (compared to a fuel cell and a cooling circuit having piping, a conveying device, a heat sink, etc.), and will have a reduced weight as the Peltier element is usually lighter than a regular cooling circuit.

Due to the areal contact between the Peltier element and the fuel cell stack, an efficient heat dissipation from the fuel cell stack to the (cooling) Peltier element can be achieved. This further allows operating the Peltier element in a manner that keeps the temperature of the fuel cell stack constant or at least substantially constant. Particularly, the Peltier element can be controlled, e.g. by applying a specific current, in such a manner that the Peltier element dissipates very precisely the heat of the fuel cell stack that has to be dissipated. This can further be facilitated by controlling the Peltier element based on the control of the fuel cell stack. In other words, the fuel cell stack is controlled by provision of fuel and oxidiser to generate a particular electrical power output. With the knowledge of the fuel cell stack control parameters, the Peltier element can be controlled in correspondence.

In the present disclosure a fuel cell stack comprises a stack of a plurality of single fuel cells. All single fuel cells operate together in the stack. The number of fuel cells in the stack is irrelevant for the present disclosure, but is rather part of the design of the fuel cell with respect to a desired power output. Thus, the terms "fuel cell stack" and "fuel cell" can be used interchangeably in the present disclosure and mean a fuel cell having one or more single fuel cells stacked together.

In an implementation variant, the fuel cell system can comprise an electrical power source supplying the electric current to the Peltier element, and a switch configured to switch a polarity of the electric current supplied to the Peltier element. Switching polarity of the electric current means connecting a positive terminal of the electrical power source to a first electrical connector of the Peltier element and a negative terminal of the electrical power source to a second electrical connector of the Peltier element, and interchanging the connection of the positive and negative terminals with respect to the first and second electrical connectors.

The surface of the Peltier element being in areal contact with the fuel cell stack is heated or cooled depending on the polarity of the electric current supplied to the Peltier element. Thus, the fuel cell stack can either be heated or cooled depending on the position of the switch. This allows, for example, heating the fuel cell stack, particularly at a time when the fuel cell is started and, hence, cold. Thus, the fuel cell stack can be brought to an (optimal) operating temperature in a fast manner, which increases efficiency of the fuel cell stack. Likewise, when the fuel cell stack has reached operating temperature and dissipates heat (depending on the operational load of the fuel cell stack), the Peltier element can be switch to cooling.

In a further implementation variant, the fuel cell system can further comprise one or more additional Peltier elements having two opposite surfaces that achieve different temperatures, when a current is applied to the additional Peltier element. Moreover, one of the two opposite surfaces of each of the one or more additional Peltier elements is in areal contact with a respective surface of the fuel cell stack. In other words, further Peltier elements are arranged around the fuel cell (stack) at different surfaces than the first-mentioned Peltier element.

In another implementation variant, instead of one or more additional Peltier elements, the first-mentioned Peltier element can likewise be shaped to correspond to the outer surfaces of the fuel cell stack and, hence, covers several surfaces or all surfaces of the fuel cell stack. Usually, a fuel cell stack has a rectangular/cuboidal shape with several surfaces arranged substantially perpendicular to one another. Each of these surfaces or at least some surfaces are covered (are in areal contact) with one Peltier element, such as one Peltier element per surface, or with more than one Peltier element, or several surfaces are in areal contact with one Peltier element.

In yet another implementation variant, the fuel cell system can further comprise a housing that houses the fuel cell stack and the Peltier element. Thus, the fuel cell system can be provided as a compact device.

In a further implementation variant, the housing can be configured to press the Peltier element onto the surface of the fuel cell stack. For instance, the housing can have an interior size allowing a formfitting and/or force fitting arrangement around the fuel cell stack and Peltier element, so that the fuel cell stack and Peltier element are brought into close contact with one another. Alternatively or additionally, the housing may be provided with a fastener or squeeze that allows providing and increasing a pressure on the Peltier element in the direction of the fuel cell stack.

In an implementation variant, the fuel cell system can further comprise a first structural plastic laminate covering the surface of the fuel cell stack, wherein the one of the two opposite surfaces of the Peltier element is in areal contact with a surface of the first structural plastic laminate. Thus, the fuel cell stack can be integrated into a plastic laminate which houses or at least surrounds the actual fuel cell stack. The Peltier element is then configured to heat or cool the plastic laminate and, hence, the fuel cell stack. The first structural plastic laminate can likewise form a housing for the fuel cell stack.

In yet another implementation variant, the fuel cell system can further comprise a first structural plastic laminate surrounding or housing the Peltier element provided on the fuel cell stack. In other words, the first structural plastic laminate forms a housing of the fuel cell system.

In any case, and as a mere example, the first structural plastic laminate can be a fibre reinforced plastic laminate. Such fibres can be glass fibres, carbon fibres or the like, and can increase structural stability of the fuel cell stack.

In a further implementation variant, the fuel cell system can further comprise a second structural plastic laminate covering a surface of the fuel cell stack opposite to the Peltier element. In other words, the fuel cell stack is sandwiched between the first and second structural plastic laminates. This provides for a compact fuel cell system that is protected from at least two sides.

Specifically, one of the one or more additional Peltier elements can be in areal contact with a surface of the second structural plastic laminate opposite to the first structural plastic laminate. Thus, the sandwiched fuel cell stack is provided with a respective Peltier element on two opposite sides, where the first and second structural plastic laminates are arranged.

It is to be understood that the fuel cell system can comprise a third and/or a forth structural plastic laminate that covers a further side of the fuel cell stack, so that a structural plastic laminate is provided on one, two, three or four sides of the fuel cell stack. Likewise, one, two, three, four Peltier elements can be provided around the fuel cell stack.

Furthermore, a single integrated structural plastic laminate can surround at least four sides of the fuel cell stack. The fuel cell stack may further have a front and back face not covered/surrounded by a plastic laminate, where fuel and/or oxidiser inlets and/or outlets as well as electrical connections for the power supplied by the fuel cell as well as the power required by the Peltier element(s) may be provided. It is further to be understood that even the back face and/or front face may be covered by a plastic laminate and/or a Peltier element.

In any case, and as a mere example, the second structural plastic laminate can be a fibre reinforced plastic laminate. Such fibres can be glass fibres, carbon fibres or the like, and can increase structural stability of the fuel cell stack.

In an implementation variant, the fuel cell system can further comprise a glass fibre insulator electrically insulating the fuel cell stack from the first and/or second structural plastic laminate. Thus, the fuel cell(s) cannot be influenced by an electric current applied at the component(s) surrounding the fuel cell.

In another implementation variant, the fuel cell system can further comprise a heating element arranged in or on the first and/or second structural plastic laminate. Such heating element may be used to heat up the fuel cell stack, if required, such as during start-up. This further allows operating the Peltier element only in the cooling mode.

As a mere example, the heating element can comprise a carbon fibre coated with a glass fibre insulator. A current can be applied to the carbon fibre, which then heats at least the first and/or second structural plastic laminates and, hence, the fuel cell stack. The heating element can likewise be employed to maintain the temperature of the fuel cell stack, i.e. not to heat the fuel cell stack, but only the surrounding components including the first and/or second structural plastic laminates.

In yet another implementation variant, the fuel cell system can further comprise a structural battery arranged on or in the first and/or second structural plastic laminate. The structural battery can be used to store electrical power generated by the fuel cell, such as an electric buffer storage. Due to the short distance to the fuel cell stack, the electrical loss due to conductors can be reduced. Alternatively or additionally, the structural battery can be employed to power the Peltier element(s), also with (almost) no electrical loss due to short conductors.

As a mere example, the structural battery comprises a carbon fibre reinforced negative electrode, a carbon fibre reinforced positive electrode, and a glass fibre separator, each of which includes an electrolyte. For instance, a solid-state electrolyte can be utilised consisting of polymeric resin containing lithium ions. The cathode can be made from carbon fibres coated with LiFePO₄, the anode can be made from carbon fibres, and the separator can be made from glass fibres. A positive and negative current collector may be arranged on respective sides, which can be made from aluminium or copper, such as a copper foil.

The structural battery arranged on or in the structural plastic laminate further facilitates compactness of the fuel cell system and can, hence, be integrated into the structural plastic laminate.

According to a second aspect to better understand the present disclosure, an aircraft comprises at least one fuel cell system of the first aspect or one or more of its variants.

According to a third aspect to better understand the present disclosure, an aircraft comprises at least one fuel cell system of one or more of the first aspect's variants including a structural plastic laminate. In such case, the first and/or second structural plastic laminate can be integrated into a structural plastic laminate of the aircraft, such as a primary structure of the aircraft. In other words, the primary structure of the aircraft can be equipped with an integrated fuel cell. Such integrated fuel cell may then further be supplemented with a Peltier element and/or a battery and/or a heating element. Since the primary structure of an aircraft is usually arranged in an area close to or forming an exterior of the aircraft, the primary structure will usually be exposed to cold air. Thus, cooling the fuel cell can be facilitated by this specific arrangement of the fuel cell system integrated into the primary structure of the aircraft.

As a mere example, the structural plastic laminate of the aircraft can comprise an outer skin, frames, stringers or other components of the fuselage. Such outer skin, etc., hence, can function as a heat sink for the fuel cell system. Since the outer skin of the aircraft takes up a huge portion of the aircraft, power generating fuel cells can be provided anywhere in the aircraft. In addition, a significant amount of fuel cells can be integrated into the primary structure of the aircraft, in order to provide a sufficient amount of electrical power provided by very compact fuel cell systems. This further allows weight/load balancing over the fuselage of the aircraft, instead of one large fuel cell installed at a particular location of the aircraft.

Moreover, the structural plastic laminate of the aircraft can comprise a frame, a stringer, a floor (element), a bulkhead or any other structure that forms part of the basic fuselage of the aircraft. Specifically, any of these components can function as a structure holding the fuel cell system and/or having the fuel cell system integrated therein, as well as function as a heat sink for the fuel cell system. Thus, power generation by a fuel cell can be provided, where electric power is required. Since the majority of the aircraft components are made from fibre reinforced composite materials, integrating or at least attaching the fuel cell system can be achieved in an easy manner.

Moreover, since the fuel cells are integrated into the primary structure, additional cargo space can be provided, which may be profitable for the aircraft operator.

In an implementation variant, the Peltier element of the fuel cell system can be configured to operate as a power generator, when the fuel cell stack is in an operational state where no cooling is required. As a mere example, if the primary structure of the aircraft is exposed to cold air, such as during a flight of the aircraft, the primary structure of the aircraft and the fuel cell stack have (significantly) different temperatures, with the Peltier element arranged therebetween. This temperature difference allows operating the Peltier element as a power generator.

Thus, after heating and/or cooling the fuel cell, the Peltier element can be employed, in certain operational phases of the aircraft, as an additional power generator.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a fuel cell system with a fuel cell and a Peltier element;
- Figure 2: schematically illustrates a Peltier element with a switch to change polarity of an electric current supplied to the Peltier element;
- Figure 3: schematically illustrates a fuel cell system with a housing;
- Figure 4: schematically illustrates a cross-section of an exemplary fuel cell system;
- Figure 5: schematically illustrates a cross-section of another exemplary fuel cell system; and
- Figure 6: schematically illustrates a plan view, and partial cross-sections of an aircraft comprising a fuel cell system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

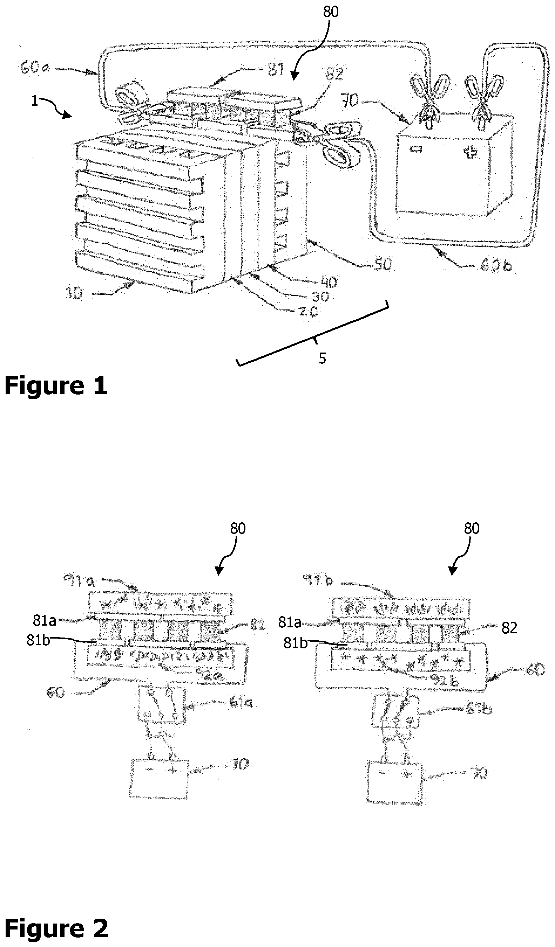

Figure 1 schematically illustrates a fuel cell system 1 with a fuel cell (stack) 5 and a Peltier element 80. Specifically, the fuel cell stack 5 comprises a first bipolar plate 10, an anode 20, a membrane 30, a cathode 40 and a second bipolar plate 50 and forms a conventional fuel cell. Such stack 5 may comprise additional fuel cells (bipolar plates 10, 50, anodes 20, membranes 30 and cathodes 40) that are stacked together and electrically connected to one another, for example, in series or parallel.

At one surface of the fuel cell stack 5, there is arranged a Peltier element 80. While the Peltier element 80 is illustrated as being provided on a partial surface of the second bipolar plate 50, it is to be understood that the Peltier element 80 can be sized differently and may be provided at any surface of the fuel cell stack 5, including the other components besides the second bipolar plate 50. Likewise, the Peltier element 80 can be provided on the front face or back face formed by the first bipolar plate 10 and/or the second bipolar plate 50.

In any case, the Peltier element 80 is in areal contact with the (partial) surface of the fuel cell stack 5. Specifically, the Peltier element 80 achieves different temperatures at two opposite surfaces 81, when an electric current is applied to the Peltier element 80. One of these "temperature changing" surfaces of the Peltier element 80 is in areal contact with the fuel cell stack 5.

Figure 2 schematically illustrates a Peltier element 80 with a switch 61 to change polarity of an electric current supplied to the Peltier element 80, which allows changing the temperature of the surfaces of the Peltier element 80. Specifically, a semiconductor 82 of the Peltier element 80 is provided in plurality. At least two of these semiconductors 82 are in electrical contact with a bridging plate 81a or 81b (also referred to as bridging plate(s) 81). For instance, the semiconductors 82 can be connected pairwise by a bridging plate 81a on one side and can be connected pairwise in a different constellation with a bridging plate 81b on the opposite side, so that at least some of the semiconductors 82 are electrically connected by the bridging plates 81 in series.

As illustrated to the left in Figure 2, when an electric cable 60 is connected to a first bridging plate 81b at the beginning of the series of semiconductors 82 and a first terminal of the switch 61, and another electric cable 60 is connected to a last bridging plate 81b at the end of the series of semiconductors 82 and a second terminal of the switch 61, an electric current of a first polarity can be applied from the power supply 70 (such as a battery) via the switch 61 to the Peltier element 80. This achieves cooling the upper side of the Peltier element 80, i.e. at the bridging plates 81a forming a first surface of the Peltier element 80, and heating the lower side of the Peltier element 80, i.e. at the bridging plates 81b forming a second, opposite surfaces of the Peltier element 80. A top contact material 91 may be provided that is cooled, and a bottom contact material 92 may be provided that is heated. Such contact materials 91, 92 may be non-conductive materials.

As illustrated to the right in Figure 2, the switch 61 may be switched, so that the polarity of the electric current from the power supply 70 to the Peltier element 80 is changed. In other words, electrons flow in a different direction through the Peltier element 80, which achieves heating the upper side of the Peltier element 80, i.e. at the bridging plates 81a forming a first surface of the Peltier element 80 and optionally the top contact material 91, and cooling the lower side of the Peltier element 80, i.e. at the bridging plates 81b forming a second, opposite surfaces of the Peltier element 80 and optionally the bottom contact material 92.

This allows cooling or heating one of the opposite surfaces 81, 91, 92 of the Peltier element 80 that is in areal contact with a surface of the fuel cell stack. Heating may be provided during start-up of the fuel cell 5, which operates more efficiently at an increased operating temperature, for example, between 60 and 90°C. It is to be understood that the fuel cell 5 can be of a type operating at much higher temperatures, such as solid oxide fuel cells, which can likewise be cooled by the Peltier element 80.

In case of the fuel cell already running at its operating temperature and providing exhaust heat, the polarity of the electric current can be switched using the switch 61, and the Peltier element 80 cools the fuel cell 5. It is to be understood that the bridging plates 81a and/or the top contact material 91 can be configured to dissipate heat by radiation and/or convection. This may be achieved by providing a heat exchanger and/or installing the fuel cell system in such a manner that the bridging plates 81a and/or the top contact material 91 come close to or into contact with a heat sink.

Referring back to Figure 1, although the Peltier element 80 is illustrated as being in areal contact with a small portion of the bipolar plate 50, it is to be understood that the Peltier element 80 can be in contact with the entire upper surface of the fuel cell stack 5 or a different portion thereof than illustrated. Furthermore, the Peltier element 80 may likewise be provided and sized in such a manner that it comes into areal contact with more than one surface of the fuel cell stack 5. Alternatively or additionally, a plurality of Peltier elements 80 can be provided and be in areal contact with a respective surface (or portion of such surface) of the fuel cell stack 5.

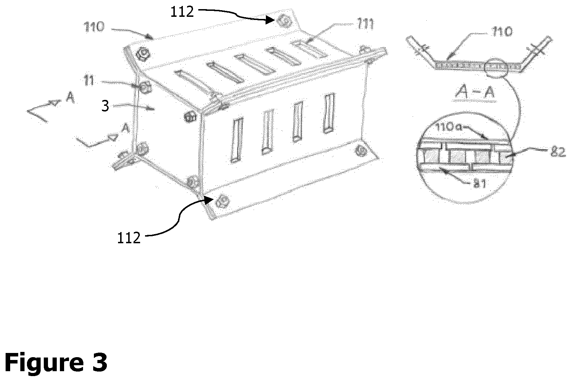

Figure 3 schematically illustrates a fuel cell system 1 with a housing 110. Such housing 110 may be configured to house the fuel cell stack 5 and the Peltier element 80. As a mere example, the housing 110 can be configured to press the Peltier element 80 onto the surface of the fuel cell stack 5.

In more detail, the housing 110 may comprise several components that are bolted or screwed to one another. By sizing the several components of the housing 110 to correspond to the outer dimensions of the fuel cell stack 5 or to be slightly smaller, bolting or screwing the components will press the components onto the fuel cell stack 5. Figure 3 illustrates exemplary fasteners 112, such as bolts or screws, only two of which are provided with reference signs for brevity reasons. In order to have a force fitting arrangement, each housing component 110 may have a substantially U-shaped cross-section, wherein the outer flanges are arranged at an angle greater than 90°. This allows that a pair of outer flanges of two adjacent housing components 110 can abut against each other and can be bolted or screwed together. Thereby, all housing components 110 surround the fuel cell stack 5, while the inner surface of each housing component 110 is in contact with the fuel cell stack 5.

In this case, one or more of the housing components 110 can have a Peltier element 80 integrated therein. As a mere example, the housing component 110 may house the Peltier element 80, and optionally forms the top contact surface 91 and/or the bottom contact surface 92. This is illustrated in the detailed cross-section of such housing component 110. As a mere example, the housing component 110 can be made from a structural plastic component, such as a fibre reinforced plastic component, wherein the Peltier element 80 is surrounded by the plastic material.

Alternatively, the Peltier element 80 can be placed on the surface of the fuel cell stack 5 as illustrated in Figure 1, while the housing 110 surrounds/contacts the Peltier element 80, and the remaining portions of the fuel cell stack 5 where there are no Peltier elements 80 arranged at such remaining portions.

Figure 3 further illustrates an end plate 3 of the fuel cell stack 5 and a tension bolt 11 that places the fuel cell stack 500 under compression. Such end plate 3 can be made from a similar or the same material as the housing component 110. Alternatively, the end plate 3 can be integrated into the housing components 110 (not illustrated). Likewise, there can be a front plate (not visible in Figure 3) corresponding to the end plate 3.

Furthermore, one or more of the housing components 110 can be provided with one or more cut outs for a reactant flow, i.e. for fuel or oxidiser to enter or exit the fuel cell stack 5. Likewise, the end plate 3 or front plate (not visible) can be provided with cut out(s) for such a reactant flow.

As can be derived from Figure 3, the fuel cell system 1 of the present disclosure can be at least partially integrated into a housing 110. When using a plastic laminate, such as a fibre reinforced plastic laminate, as housing portions or components 110, the entire fuel cell system 1 can be integrated into further components. In other words, the further components can substitute at least a portion of the housing 110.

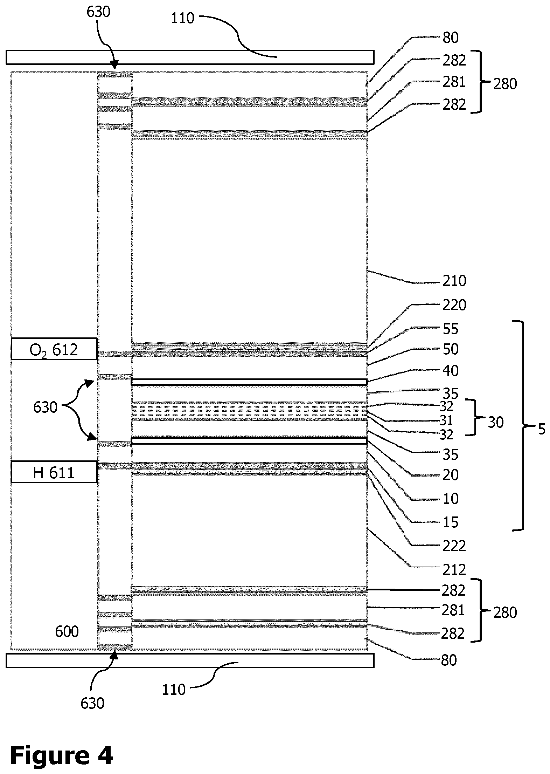

This is described in more detail with respect to Figure 4, which schematically illustrates a cross-section of an exemplary fuel cell system 1. It is to be understood that Figure 4 only schematically illustrates a possible arrangement of the fuel cell system components, particularly in form of layers. The size of the illustrated layers is not intended to define a particular size or relationship between different components/layers, but is for illustrative purposes only.

Figure 4 illustrates in the middle section a fuel cell stack 5 having in its centre a membrane 30, for example, one or more Proton Exchange Membrane/s (PEM/s) 31, and one or more Catalyst Coated Membrane/s (CCM/s) 32, surrounded by a microporous layer (MPL) 35. As in the rather general illustration of Figure 2, the fuel cell stack 5 further comprises gas diffusion layers (GDL) 20 and 40, which can each be covered by a flow field bipolar plate 10 (on the anode side) and 50 (on the cathode side). The power generated by the fuel cell stack can be conducted by the current collector plates 15 (on the anode side) and 55 (on the cathode side).

Such exemplary fuel cell stack 5 can be surrounded or covered by a fibre reinforced laminate 210 (on the cathode side) and a fibre reinforced laminate 212 (on the anode side). One or both of these laminates 210, 212 can be made from a carbon fibre reinforced plastic laminate. Moreover, the fuel cell stack 5 can be covered/protected with respect to one or both of these laminates 210, 212 by a glass fibre insulator 220 (on the cathode side) and 222 (on the anode side).

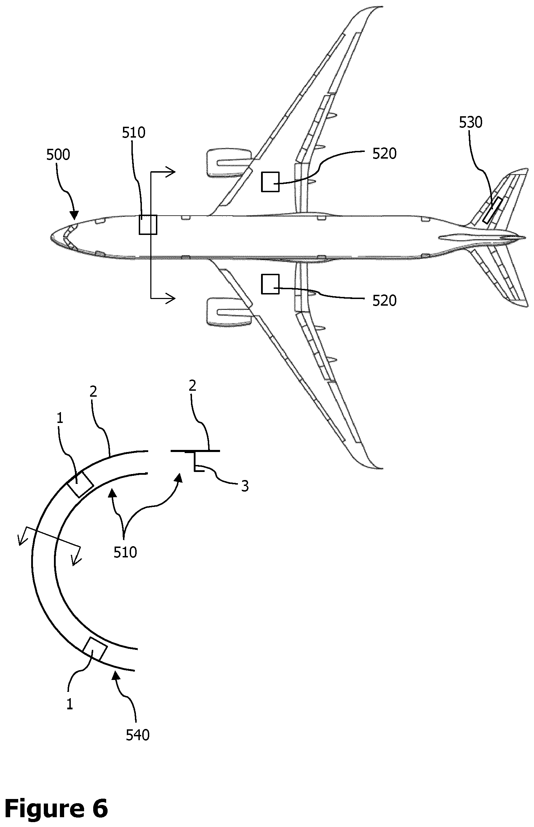

The fibre reinforced laminates 210, 212 can simply form a housing of the fuel cell stack. However, it is likewise conceivable that the laminates 210, 212 form part of a different structure, such as a primary structure of a larger device or component. As a mere example, since aircrafts 500 (Figure 6) require lightweight power generation, the fuel cell system 1 of the present disclosure can be attached to or integrated into a primary structure of the aircraft 500, which is quite often made from fibre reinforced plastic laminate. Thus, the illustrated laminate(s) 210, 212 can be a primary structure of the aircraft 500.

This is illustrated in more detail in Figure 6 schematically showing a plan view of an aircraft, a schematic first partial cross-section viewing in the longitudinal direction (as indicated in the plan view) and a second partial cross-section taken through the outer fuselage (as indicated in the first partial cross-section). Many portions of the aircraft 500 are made from fibre reinforced plastic laminate, such as carbon fibre reinforced plastic or composites. Only exemplarily Figure 6 highlights four regions of the aircraft 500 which include fibre reinforced plastic. These regions can be the main fuselage 510, a wing portion 520, a portion of the horizontal stabiliser (tail) 530, and a portion of the belly or bilge 540. The main fuselage comprises an outer skin 2 and frames 4 as well as stringers (not illustrated), which are also often made from composite materials, such as a fibre reinforced plastic laminate. All of these portions and components can be employed to attach or integrate the fuel cell system 1 thereto, including the skin 2, frames 4, stringers, ring components, tail components, etc..

Since each of these regions 510 - 540 is also arranged close to or at the skin 2 of the aircraft 500 (or comprises the skin 2), the fuel cell system 1 can be easily integrated or attached to these regions 510 - 540. In addition, as the skin 2 of the aircraft 500 is exposed to the ambient air, which during flight can be quite cold, the fuel cell stack 5 can be easily cooled and/or the temperature of the fuel cell stack 5 can be easily controlled by the Peltier element 80. Figure 6, hence, illustrates several exemplary positions to install and/or integrate a fuel cell system 1 of the present disclosure. This includes the skin 2, the frame(s) 4, the stringers, a wing structure, a tale structure, etc.. The illustrated positions are to be understood as a few examples, but many other regions of the aircraft can be used to install the fuel cell system 1. Thus, any of the regions 510 - 540 can have a structural component (or primary structure) of the aircraft 500 that can form or can be merged with one or both of the fibre reinforced laminates 210, 212, which are, hence, also referred to as structural fibre reinforced laminates.

Turning back to Figure 4, the fuel cell system 1 can further comprise a heating element 280. As a mere example, in case of the aircraft 500 reaching a high altitude, the outside temperatures can be very low (around minus 50°C or less). In this case, if the fuel cell system 1 is installed or integrated into one of the regions 510 - 540, the fuel cell stack 5 may require heating instead of cooling, as the primary structure of the aircraft 500 is a greater heat sink then required by the fuel cell stack 5.

The heating element 280 may likewise be merged or integrated into the structural fibre reinforced laminates 210, 212. Specifically, the heating element can be attached on a surface, can surround or can be integrated into the plastic laminate material 210, 212. As a mere example, the heating element can include a carbon fibre 281 that is electrically connected to a power supply 70 and/or the fuel cell stack 5 and heats when an electric current runs therethrough. In order to electrically shield the carbon fibre 281 from the remaining components of the fuel cell system 1, and a carbon fibre 281 can be coated by a glass fibre insulator 282. Such glass fibre insulator 282 can likewise be easily integrated into the plastic matrix of the plastic laminates 210, 212, i.e. during manufacturing of the plastic laminates 210, 212.

Finally, the fuel cell system 1 of Figure 4 can have the Peltier element 80 on an outer surface. In other words, the Peltier element 80 can be attached on a surface, can surround or can be integrated into the plastic laminate material 210, 212. It is to be understood that the Peltier element 80 can likewise be arranged in the fuel cell system 1 closer to the fuel cell stack 5, such as between the heating element 280 and the current collector plates 15, 55.

Arranging the Peltier element 80 at an outer circumference of the fuel cell system 1 allows a further advantage. Specifically, as indicated above, the fuselage of the aircraft 500, particularly the outer skin 2 and/or frames 4 and the like, may become quite cold, particularly if the aircraft 500 flies at a high altitude. In this case, there is a temperature difference between the outer side and the inner side of the Peltier element 80 (upper and lower side in Figure 4), particularly due to the heat dissipation of the fuel cell stack 5 and the cold air around the aircraft 500. A Peltier element 80 being exposed to such different temperatures, can operate as a power generator. Thus, while dissipating heat from the fuel cell stack 5 towards the exterior of the aircraft 500, additional electric power can be generated, which increases efficiency of the aircraft 500. Thus, the Peltier element 80 can be employed to facilitate starting the fuel cell stack 5, to cool the fuel cell stack, if required, such as during ground operation or low altitude flights of the aircraft 500, and to generate electric power.

As illustrated in Figure 4, more than one Peltier element 80 can be provided, such as one at the top and one at the bottom as shown in Figure 4. It is to be understood that a plurality of Peltier elements 80 can be arranged around the fuel cell stack 5 as illustrated in Figure 3 and/or a single Peltier element 80 can be provided to surround more than one side of the fuel cell stack 5.

It is further to be understood that the fuel cell system 1 as illustrated in Figure 3 can likewise be integrated into a structural laminate 510 - 540. In such case, a pressure provided by fasteners 112 may not be required, as the structural laminate 510 - 540 can enclose and integrate the fuel cell system 1 therein. In other words, the layer structure of Figure 4 can be arranged in any orientation with respect to the structure of the aircraft 500, while in the directions not visible in Figure 4 similar component(s) of the fuel cell system, such as heating element 280, Peltier element 80, and the like can be provided, too.

Figure 4 further illustrates an exemplary microcontroller 600, that can be part of the fuel cell system 1. The microcontroller 600 is configured to control operation of the fuel cell stack 5 as well as of the Peltier element 80. In case of the provision of a heating element 280, the microcontroller 600 is further configured to control the heating element 280. Figure 4 schematically illustrates electric lines 630 connecting the microcontroller 600 with each of the electric components to be controlled, as well as the fuel cell stack 5, which generates electric power. It is to be understood that there may be additional electrical components, such as cables, switches, relays, electric circuits and the like, which support the microcontroller 600 or are under control of the microcontroller 600 to provide electric energy from the fuel cell stack 5 and/or the Peltier element 80, and to supply electric energy to the heating element 280 and/or the Peltier element 80.

Furthermore, the microcontroller 600 controls operation of the fuel cell stack 5, such as by controlling provision of fuel supply 611, such as hydrogen or methane supply, and controlling provision of oxidiser supply 212, such as air or oxygen, supplied to the fuel cell stack 5 via the illustrated schematic ducts or pipes. Thus, the fuel cell system 1 can be produced in a very compact manner, particularly having short electrical conductors.

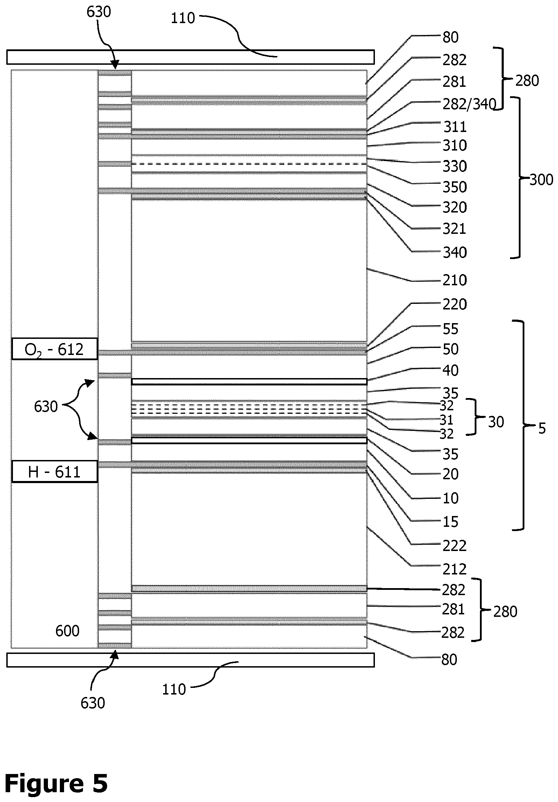

Figure 5 illustrates a cross-section of another exemplary fuel cell system 1. The majority of the features/components of the fuel cell system 1 are the same as those in Figure 4. Thus, the description of the same elements (also provided with the same reference numerals) is omitted for brevity reasons.

The difference between the structure illustrated in Figure 5 compared to that in Figure 4 is a structural battery 300 being provided in the fuel cell system 1. Specifically, Figure 5 illustrates the battery 300 to be arranged on a surface, integrated into or being otherwise attached to the (upper) laminate 210. Thus, a storage or buffer of electric energy can be provided and facilitated by the fuel cell system 1 itself. As a mere example, the battery 300 can include a negative electrode 310 including structural electrolytes (and an electrically attached current collector 311), a positive electrode 320 including structural electrolytes (and an electrically attached current collector 321). Between both electrodes 310, 320, there can be a separator 330 including structural electrolytes. The separator 330 can be a glass fibre separator.

Moreover, a temperature sensor 350 can be integrated into the fuel cell system 1. As the battery 300 may require monitoring of its temperature, the temperature sensor 350 can be integrated into the battery 300 as illustrated in Figure 5.

The battery can further be covered by a glass fibre insulator 340, that electrically insulates the battery 300 from the surrounding components, such as structural laminate 210, heating element 280, Peltier element 80, the fuel cell stack 5 and the like.

It is to be understood that more than one battery 300 can be employed in the fuel cell system 1. Likewise, the battery/batteries 300 can be arranged in/at the structural laminate 212.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A fuel cell system (1), comprising:
a fuel cell stack (5); and
a Peltier element (80) that, when an electric current is applied to the Peltier element (80), achieves different temperatures at two opposite surfaces (81),
wherein one of the two opposite surfaces (81) of the Peltier element (80) is in areal contact with a surface of the fuel cell stack (5).

2. The fuel cell system (1) of claim 1, further comprising:
an electrical power source (70) supplying the electric current to the Peltier element (80); and
a switch (61) configured to switch a polarity of the electric current supplied to the Peltier element (80),
wherein the surface (81) of the Peltier element (80) being in areal contact with the fuel cell stack (5) is heated or cooled depending on the polarity of the electric current supplied to the Peltier element (80).

3. The fuel cell system (1) of claim 1 or 2, further comprising:
one or more additional Peltier elements (80) having two opposite surfaces (81) that achieve different temperatures, when a current is applied to the additional Peltier element (80),
wherein one of the two opposite surfaces (81) of each of the one or more additional Peltier elements (80) is in areal contact with a respective surface of the fuel cell stack (5).

4. The fuel cell system (1) of one of claims 1 to 3, further comprising:
a housing (110) housing the fuel cell stack (5) and the Peltier element (80),
wherein, preferably, the housing (110) is configured to press the Peltier element (80) onto the surface of the fuel cell stack (5).

5. The fuel cell system (1) of one of claims 1 to 4, further comprising:
a first structural plastic laminate (210) covering the surface of the fuel cell stack (5),
wherein the one of the two opposite surfaces (81) of the Peltier element (80) is in areal contact with a surface of the first structural plastic laminate (210), and
wherein, preferably, the first structural plastic laminate (210) is a fibre reinforced plastic laminate.

6. The fuel cell system (1) of claim 5, when being dependent on claim 3, further comprising:
a second structural plastic laminate (212) covering a surface of the fuel cell stack (5) opposite to the Peltier element (80),
wherein one of the one or more additional Peltier elements (80) is in areal contact with a surface of the second structural plastic laminate opposite to the first structural plastic laminate.

7. The fuel cell system (1) of claim 5 or 6, further comprising:
a glass fibre insulator (220, 222) electrically insulating the fuel cell stack (5) from the first and/or second structural plastic laminate (210).

8. The fuel cell system (1) of one of claims 5 to 7, further comprising:
a heating element (280) arranged in or on the first and/or second structural plastic laminate (210, 212),
wherein, preferably, the heating element (280) comprises a carbon fibre (281) coated with a glass fibre insulator (282).

9. The fuel cell system (1) of one of claims 5 to 8, further comprising:
a structural battery (300) arranged on or in the first and/or second structural plastic laminate (210, 212),
wherein, preferably, the structural battery (300) comprises a carbon fibre reinforced negative electrode (310), a carbon fibre reinforced positive electrode (320), and a glass fibre separator (330), each of which includes an electrolyte.

10. An aircraft (500), comprising:
at least one fuel cell system (1) of one of claims 1 to 9.

11. An aircraft (500), comprising:
at least one fuel cell system (1) of one of claims 5 to 9,
wherein the first and/or second structural plastic laminate is integrated into a structural plastic laminate (510, 520, 530, 540) of a primary structure of the aircraft (500), and
wherein, preferably, the structural plastic laminate (510, 520, 530, 540) of the aircraft comprises an outer skin (2) of the fuselage.

12. An aircraft (500) of claim 10 or 11, wherein the Peltier element (80) of the fuel cell system (1) is configured to operate as a power generator, when the fuel cell stack (5) is in an operational state where no cooling is required.
